# EUROPEAN PATENT SPECIFICATION

(11) **EP 3 934 819 B1**
(45) Date of publication and mention of the grant of the patent: **25.10.2023**
(21) Application number: 20709568.8
(22) Date of filing: 06.03.2020
(51) Int. Cl.: B08B 1/04, B08B 1/00, B08B 3/02, B60S 3/04, B64F 5/30, A46B 13/02

(54) **IMPROVED VEHICLE CLEANING TOOL**
VERBESSERTES REINIGUNGSWERKZEUG FÜR FAHRZEUGE
OUTIL DE NETTOYAGE DE VÉHICULE AMÉLIORÉ

(30) Priority: 06.03.2019 BE 201905139
(43) Date of publication of application: 12.01.2022
(73) Proprietor: BP Precision Airline Services BVBA, 1831 Diegem (BE)
(72) Inventor: BENSCH, Jan, 2431 Laakdal (BE); DEVELTER, Armand, 1982 Elewijt (BE); PALSTERMANS, Steven, 1745 Opwijk (BE)
(74) Representative: Brantsandpatents bv
(86) International application number: PCT/EP2020/055999
(87) International publication number: WO 2020/178424

(56) References cited:
- WO-A1-00/48901
- WO-A1-2015/133389
- WO-A1-2018/007846
- CN-A- 104 665 711
- DE-C- 593 062
- NL-C2- 1 009 886
- US-A- 5 588 176
- US-A- 6 021 959
- US-A- 6 134 734
- US-A1- 2002 066 148
- US-A1- 2003 177 595

## Description

### FlELD OF THE INVENTION

The present invention relates to a device for cleaning vehicles. The invention may therefore pertain to IPC B60S 3/04 and/or IPC B08B 1/00.

### BACKGROUND

US 6 134 734 describes an apparatus and methods for performing maintenance procedures such as washing, cleaning, and painting to an aircraft. The document also discloses an apparatus and method to track or follow the contour of the aircraft by providing the weight of the control of the maintenance tool adjacent the aircraft and reducing the problems and risks associated with the use of a long boom-type arm extending outwardly from hangar walls or roofs to provide the maintenance functions.

US 2002 0 066 148 discloses a tool suitable for cleaning a vehicle in accordance with the preamble of claim 1, and a method of cleaning. It describes a motorized brush apparatus, for example for cleaning pool tiles.

DE 593 062 describes an apparatus for cleaning or removing glue, paint, etc. from ceilings and walls.

The document further mentions an aircraft maintenance apparatus and method with increased degrees of freedom of movement for movement of a maintenance tool in the X, Y, and Z planes. The apparatus preferably has a mobile base having a plurality of wheel members for allowing the mobile base to travel along surfaces and a plurality of support surface registering members for registering the mobile base to a support surface to inhibit movement of the plurality of wheel members. The apparatus also preferably has a boom member having a proximal end portion rotatably mounted to the mobile base and being movable between a retracted position and an extended position and an aircraft maintenance tool rotatably connected to a distal end portion of the boom member.

US 2007/0 119 005 discloses a system for cleaning the outer skin of aircraft of all types, whereby the system comprises a cleaning head. The cleaning head is fastened to an arm, which is mounted on a system support, for example, on a low-bed truck. The cleaning head comprises rollers provided with bristles.

US 5 588 176 describes a water recovery brush for automotive appearance industry and more particularly for an environmentally improved vehicle washing system. The water sealing is achieved by the use of a flexible foam ring.

There remains a need in the art for an improved water or cleaning liquid recovery system and a higher cleaning efficiency, both in terms of time and dirt removal. Moreover, there is still a need to further reduce water waste. Also, there remains the problem of making the vehicle cleaning tool more environmentally and ecologically sustainable. Furthermore, the applicant notes that the user friendliness of a vehicles cleaning tool, especially for cleaning an aircraft, needs to be improved.

### SUMMARY OF THE I NVENTI ON

The present invention and embodiments thereof serve to provide a solution to one or more of above-mentioned disadvantages. To this end, the present invention relates to a vehicle cleaning tool according to claim 1.

The present invention also relates to a method for cleaning a vehicle according to claim 11.

A cleaning tool comprising a cleaning head, a waiting cavity, a supply tube and a nozzle is able to achieve higher cleaning efficiency, both in terms of time and dirt removal, compared to known vehicle cleaning tools. The invention is beneficial for cleaning any outer surface of a vehicle. However, its main advantages lay in cleaning aircrafts, taking into account that the surface of an aircraft is significantly larger compared to the surface of a car or a truck.

Further advantages, features, and examples of the present invention are disclosed in the detailed description.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** shows a schematic representation of a perspective view of an embodiment of a cleaning head of a vehicle cleaning tool according to the present invention. This figure is discussed in further detail in Example 1.
**Figure 2** shows a schematic representation of an embodiment of an application face of a cleaning head of a vehicle cleaning tool according to the present invention. This figure is discussed in further detail in Example 2.
**Figure 3** shows a schematic representation of an embodiment of an application face of a cleaning head of a vehicle cleaning tool according to the present invention. This figure is discussed in further detail in Example 2.
**Figure 4** shows a schematic representation of an embodiment of a vehicle cleaning tool according to the present invention, comprising an anti-gravitational arm and a cleaning head mounted thereon. This figure is discussed in further detail in Example 3.
**Figure 5** shows a schematic representation of an embodiment of a substation of a vehicle cleaning tool according to the present invention. This figure is discussed in further detail in Example 4.
**Figure 6** shows a schematic representation of an embodiment of a substation of a vehicle cleaning tool according to the present invention. This figure is discussed in further detail in Example 5.
**Figure 7** shows a schematic representation of an embodiment of an air-liquid separator of a vehicle cleaning tool according to the present invention. This figure is discussed in further detail in Example 6.
**Figure 8** shows a schematic representation of an embodiment of a ground station of a vehicle cleaning tool according to the present invention. This figure is discussed in further detail in Example 7.

### DETAILED DESCRIPTION OF THE INVENTION

In a first aspect the present invention concerns a vehicle cleaning tool. The vehicle cleaning tool can comprise a ground station, a substation, an anti-gravity arm, a cleaning head or a combination thereof. The vehicle cleaning tool may be adapted to recover and/or reuse a cleaning liquid. Even though the main advantages of the present invention pertains to the field of cleaning the outer surface of an aircraft, the vehicle cleaning tool is also suitable for cleaning any type of vehicle including a car, a truck, a boat or ship, etc. The invention is not limited to cleaning vehicles, it is also suitable for the cleaning of windows or different glass surfaces (e.g. glass skyscrapers).

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

"Anti-gravity arm" as used herein refers to any system countering the pull of gravity, therefore at least partially supporting the weight of an object mounted or coupled to the system. Preferably, the system fully counters the pull of gravity.

"Application face" as used herein refers to a face of the vehicle cleaning tool component which is oriented towards a surface of a vehicle during the cleaning process.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation. Whereas the terms "one or more" or "at least one", such as one or more or at least one member(s) of a group of members, is clear *per se*, by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

In accordance with the invention, the vehicle cleaning tool comprises a cleaning head. The cleaning head comprises a housing. The housing comprises an application face. Preferably, the cleaning head is configured to be positioned onto or in close proximity of a surface of a vehicle. The housing also comprises a recess located at the application face. The vehicle cleaning tool further comprises a waiting cavity for cleaning liquid. The vehicle cleaning tool comprises a supply tube configured for supplying cleaning liquid to the waiting cavity. The vehicle cleaning tool comprises a nozzle comprising a passage for cleaning liquid flow from the waiting cavity to the recess. The nozzle may be detachably attached to the cleaning tool. Preferably, the nozzle is configured for rotating.

The combination of the cleaning head, the waiting cavity, the supply tube and the nozzle is especially advantageous. In cleaning systems, suitable for cleaning vehicles, a cleaning liquid is solely supplied by a supply tube to the application face of a cleaning head. This is disadvantageous for different reasons. Usually a pump pumps the cleaning liquid through the supply tube to the cleaning head. Depending on inflections present in the supply tube and the height of the cleaning head, the speed at which the cleaning liquid is administered to the cleaning head can vary throughout the cleaning process. As a consequence the cleaning liquid may not be uniformly in time supplied to the application face, which can result in inefficient cleaning. The cleaning of a vehicle surface can last longer due to the variability in the administration of the cleaning liquid. In case that the cleaning tool is heavy the disadvantage would not only lay in the time inefficiently of the cleaning, but also in the user friendliness of the cleaning tool. A second disadvantage relates to the achieved dirt removal. When cleaning, the velocity at which the water hits a surface of a vehicle is important. If the water velocity is variable the efficiency of the dirt removal will drop. Hereby the cleanness of a vehicle would not be the only problem, also the utilisation of fresh water and cleaning agent would not be optimized. Even though these disadvantages are present in the cleaning of any kind of vehicle, they are especially relevant for the cleaning of aircrafts as the surface of an aircraft is considerably bigger than the surface of a car or a truck. The mentioned combination allows for the removal of speed variations in the supply of the cleaning liquid to the application face of the cleaning head, and therefore also to a surface of a vehicle. The efficiency of cleaning is hereby significantly increased.

The waiting cavity is especially advantageous for the mechanical transition between the supply tube and the rotating parts of the cleaning head. The waiting cavity improves the stability of the transition, ensuring the proper working of the cleaning tool.

By making the nozzle detachably attached to the vehicle cleaning tool, different nozzle outlets could be mounted onto the vehicle cleaning tool. The speed at which the cleaning liquid comes out of the nozzle depends on the geometric aspects of the nozzle. Depending on the cleaning specification it might be advantageous to either increase or decrease the speed and volume per unit time of the liquid. Therefore the ability of using different nozzles may allow to optimize the cleaning according to the needed cleaning specifications.

In accordance with the invention, the vehicle cleaning tool comprises a sensor configured for measuring the distance between a surface of a vehicle and the cleaning head. The vehicle cleaning tool can further comprise other sensors, e.g. liquid pressure sensors.

The addition of a sensor configured for measuring the distance between the cleaning head and a vehicle surface is advantageous. A common problem with cleaning tools, suitable for cleaning vehicles, is that they waste a lot of water. Water waste has different negative effects on the environment, and should be avoided as much as possible. Moreover, the spillage of cleaning agent (e.g. soap or detergent) onto the ground should also be minimized as much as possible for different environmental and ecological reasons. The addition of a sensor, gives the cleaner the knowledge when the cleaning tool is too far from the surface, and therefore does not clean efficiently anymore (whereby the cleaning liquid is waisted and cleaning agent is spilled onto the ground). In case the cleaning head is configured to be placed onto a surface of a vehicle, the sensor could inform the cleaner that the cleaning head has become detached form the surface, and therefore does not preform the cleaning as it was configured to.

In accordance with the invention, the vehicle cleaning tool comprises a valve system located at or near an end of the supply tube. Preferably, said end is closest to the waiting cavity. The valve system is configured for adjusting fluid supply from the supply tube to the waiting cavity. The valve system may be adapted to open or close the liquid flow through the supply tube. Preferably, the valve system can be a solenoid valve system.

Usually closing the cleaning liquid supply of a vehicle cleaning tool happens by closing off the supply at the beginning of the supply tube which can be done either manually or automatically (the supply can be automatically closed after a predetermined amount of time). When aircrafts are being cleaned, the beginning of the supply tube lays far away from the cleaning head. As consequence water can be wasted by the need to physically go to the beginning of the supply tube and closing off the liquid supply. In this process a lot of the cleaning liquid is wasted. When the supply closes automatically, a significant amount of liquid present in the long supply tube will still have enough kinetic energy and therefore will continue to flow. Even though the waste is limited, there is still a significant amount of liquid being wasted. Positioning a valve system at or near an end of the supply tube will minimize the waste, the liquid supply will be directly closed off near the cleaning head. In this way, less water will have enough kinetic energy to exit the vehicle cleaning tool through the nozzle. Moreover, by the positioning of the valve system it will be more easy for the cleaner to close off the liquid supply whenever needed, therefore saving a significant amount of cleaning liquid.

In accordance with the invention, the cleaning vehicle tool comprises both a sensor and a valve system. Preferably, the vehicle cleaning tool is configured to close off said end of the supply tube via the valve system when the distance between the cleaning head and the surface of the vehicle exceeds a predefined limit.

The combination of the said sensor and the said valve system is especially advantageous. By sensing when the cleaning head is removed from the surface or when the cleaning head is located too far from the surface, the valve system can directly be closed off. The closing can happen either automatically or manually.

Hereby, the cleaning tool is more environmentally and ecologically sustainable.

In a preferred embodiment the cleaning head may comprise a circumferential sealing brush. Preferably, the circumferential sealing brush is located at the application face and at or near the circumference of the recess of the cleaning head. In an even more preferred embodiment, the cleaning head comprises at least two spaced circumferential sealing brushes. Preferably, the sealing brushes are located at the application face and at or near the circumference of the recess of the cleaning head. In an even more preferred embodiment, the said at least two spaced circumferential sealing brushes may be two spaced circumferential sealing brushes. The one or more sealing brushes may or may not be detachably attached to the cleaning head.

During the cleaning of a surface it is not desired to spill the cleaning liquid. Saving water during the cleaning of a surface of a vehicle is as important as saving water by optimizing the closure of the liquid supply system. By keeping the water inside the washing head, the liquid could be recovered. The sealing of the cleaning liquid inside the cleaning head is further advantageous for minimizing the possibility that the cleaning agent (e.g. soap or detergent) is spilled on the ground. The cleaning tool is hereby environmentally and ecologically sustainable. Another advantage relates to the size of the cleaning liquid supply. By recycling the liquid, the cleaner does not need a large liquid reservoir. This makes it easier to adapt the vehicle cleaning tool in such a way that it is moveable and does not need an external water sources. As a result the vehicle cleaning tool could be used in every single environment. This is especially advantageous for the cleaning of aircrafts. Moreover, by using brushes as a sealing mechanism, a flexible sealing can be achieved, which can be easily attached and detached from the surface and adapt itself to different surface geometries. The brushes also allow for moving the cleaning head from one surface section to another one without the need to detach the cleaning brush from the surface.

In a preferred embodiment, the cleaning head comprises at least two spaced circumferential sealing brushes located at the application face and at or near the circumference of the recess of the cleaning head. Preferably, the spacing between the two spaced circumferential sealing brushes is between 0.1 mm and 4 cm, more preferably between 0.1 mm and 2 cm, even more preferably between 0.5 mm and 2 cm even more preferably between 0.5 mm and 18 mm, even more preferably between 1 mm and 18 mm, even more preferably between 1 mm and 9 mm.

Preferably, the spacing between the two spaced circumferential sealing brushes is at most 4 cm, more preferably at most 3.5 cm, even more preferably at most 3 cm, even more preferably at most 2.5 cm, even more preferably at most 2 cm, even more preferably at most 1.8 cm, even more preferably at most 1.6 cm, even more preferably at most 1.4 cm, even more preferably at most 1.2 cm, even more preferably at most 1 cm, even more preferably at most 9 mm, even more preferably at most 5 mm. Preferably, the spacing between the two spaced circumferential sealing brushes is at least 0.1 mm, more preferably at least 0.5 mm, even more preferably at least 1 mm, even more preferably at least 1.5 mm, even more preferably at least 2 mm, even more preferably at least 2.5 mm, even more preferably at least 3 mm. Preferably, the spacing between the two spaced circumferential sealing brushes is between 3 mm and 4 mm.

The applicant noticed that a spacing of 0.5 mm between the two spaced circumferential sealing brushes was already advantageous for recovering the cleaning liquid. By increasing the distance even further, the cleaning liquid has less energy to push itself through the second sealing brush layer. Therefore even more liquid is recovered. The applicant remarks that a spacing of between 3 mm and 4 mm was already enough to fully recover the cleaning liquid. This distance was also already advantageous for the optimization of the dimensions of the cleaning head.

In a preferred embodiment, the circumferential sealing brushes may be flexible. Preferably, the bristles of the circumferential sealing brush comprise a material chosen from the group comprising polyamide, animal hair, feathers, plants or a combination thereof. More preferably, the bristles of the circumferential sealing brush comprise polyamide. Even more preferably, the bristles of the circumferential sealing brush comprise polyamide 6.

The applicant noticed by making the bristles of the sealing brushes flexible a more efficient sealing is achieved. These brushes adapt easily to different geometries. Therefore different, more challenging, geometries can be as easily cleaned as a flat surface. One cleaning tool can be used to clean the whole surface of any vehicle without the need to remove the cleaning head from the vehicle surface. As a result the cleaning of a vehicle becomes more time efficient. Flexible sealing bristles are also advantageous for moving the cleaning head from one surface section to another, without the need to detach the cleaning head from the surface of a vehicle.

In a preferred embodiment, the bristles of the circumferential sealing brushes are positioned at an angle of between 5° and 40°, preferably between 10° and 35°, more preferably between 15° and 30°, even more preferably 20° and 25°, compared to the normal of the application face. In an even more preferred embodiment, the bristles of the circumferential sealing brushes are positioned at an angle of 23° compared to the normal of the application face. Preferably, the angle of the bristles of the one or more sealing brushes is directed clockwise or counter clockwise.

The applicant has noticed that implementing the hairs of the brushes at an angle compared to the normal of the application face resulted in a better movement flexibility of the cleaning head. The applicant notes that especially an angle between 20° and 25° resulted in better movement flexibility. Moreover, the applicant noticed that placing the brushes at an angle between 20° and 25° also enhanced the sealing of the liquid in the washing head.

In a preferred embodiment, the cleaning head comprises a circumferential support brush. Preferably, the circumferential support brush is located at the application face and at or near the circumference of the recess of the cleaning head. The support brush may have a different hair thickness compared to the one or more sealing brushes. The bristles of the support brush can be thicker compared to the bristles of the sealing brush. The support brush may have a different bristle length compared to the bristle length of the sealing brush. The bristle length of the support brush can be longer, shorter or equal to the bristle length of the sealing brush. Preferably, the bristles of the support brush comprise a material chosen from the group comprising polyamide, animal hair, feathers, plants or a combination thereof. The support brush may or may not be detachably attached to the cleaning head.

The applicant has noticed that the addition of the support brushes was advantageous. The support brush was able to hold the weight of the cleaning head and/or the pressing force of the cleaner.

In a preferred embodiment, the cleaning head comprises a brush disc. Preferably, the brush disc is located in the recess. Preferably, the brush disc comprises a disc application face. Preferably, the brush disc further comprises one or more brushes, located at the disc application face. Preferably, the brush disc is configured to rotate. Preferably, the bristles of the brush comprise a material chosen from the group comprising polyamide, animal hair, feathers, plants or a combination thereof. More preferably, the bristles of the brush comprise polyamide 6 or pig hair.

A brush disc configured to rotate and comprising one or more brushes is especially advantageous for the cleaning efficiency. The brushes, together with the cleaning liquid, can more easily remove the dirt of a surface, and as such increase the efficiency of the cleaning. The applicant observed that pig hair could eliminate the scratching possibility. Further, the applicant has noticed that pig hair brushes have a tremendous foaming capacity, creating a deep clean.

In a preferred embodiment, the disc application face comprises a multitude of zones and an opening located at or near the centre of the brush disc. Preferably, at least one of the zones comprises one or more brushes, and at least one of the zones comprises no brushes. Preferably, a number of at least two zones comprising brushes are interspersed, more preferably angularly interspersed, with the same number of brushless zones. Preferably, the disc application face comprises at least 2, even more preferably at least 4, even more preferably at least 6, even more preferably at least 8, zones. Preferably, The disc application face comprises at most 20, more preferably at most 18, even more preferably at most 16, even more preferably at most 14, even more preferably at most 12, even more preferably at most 10, even more preferably at most 8. The brushless zones can be smaller in surface compared to the zones comprising one or more brushes. Alternatively, the brushless zones may be equal or larger in surface compared to the zones comprising one or more brushes.

Having zones which comprise brushes and zones which do not comprise brushes is advantageous for the renewal of the cleaning liquid. Having passageways (zones not comprising one or more brushes) for the dirty or used cleaning liquid allows the cleaning head to quickly remove the used liquid, whereby the liquid is removed through one or more openings not comprising the nozzle. The applicant notices that the quicker the change the more efficient the cleaning becomes, both in terms of time and amount of dirt which is removed. The applicant further notes that especially in a configuration whereby the brushless zones alternate with zones comprising a brush, the cleaning liquid is rapidly changed.

In accordance with the invention, the cleaning head comprises one or more grooves. Preferably, the grooves are channels located in the cleaning head housing and underneath the one or more sealing brushes. Preferably, the one or more grooves are located approximately at the disc application face. Preferably, the groove opening is located at the beginning of the cleaning head recess. Preferably, the one or more grooves are configured to guide the cleaning liquid away from the recess. The circumference of the groove may or may not change throughout the length of the groove. The circumference of the groove can gradually increase or decrease throughout the length of the groove. Each groove comprises a liquid removal opening positioned at a distal end of the groove with respect to the groove opening. Preferably, the liquid removal opening is configured for removing the cleaning liquid from the cleaning head. Preferably, the cleaning head comprises at least 2, more preferably at least 4, grooves. Preferably, the cleaning head comprises at most 20, more preferably at most 18, even more preferably at most 16, even more preferably at most 14, even more preferably at most 12, even more preferably at most 10, even more preferably at most 8, even more preferably at most 6, even more preferably at most 4, grooves. Preferably, the openings of the at least two grooves are symmetrically positioned. Preferably, the liquid removal openings of the at least two grooves are symmetrically positioned with regard to the cleaning head housing geometry.

The combination wherein the brush comprises both at least two grooves, comprising a liquid removal opening, and at least two brushless zones is especially advantageous. The applicant has noticed that the combination resulted in an especially efficient cleaning liquid removal system. If a load of cleaning liquid is swept into the grooves, a plug of liquid is formed in the narrow channels. If this plug is formed at all the channels simultaneously the negative pressure is temporarily enlarged due to the lack of airflow.

In a more preferred embodiment, the groove comprises a curvature. The curvature can have a clockwise direction. Alternatively the curvature may have a counter clockwise direction.

The applicant remarks that placing the one or more grooves, comprising the liquid removal opening and a curvature, is more efficient for removing the cleaning liquid from the cleaning head in case the liquid, trapped in the cleaning head, is being rotated. The applicant notes that the liquid does not need to change the force vector already in place due to the rotation, therefore the liquid enters more easy into the grooves comprising a curvature.

In a preferred embodiment, the cleaning tool comprises one or more suction nozzles. Preferably, the suction nozzles are attached on the opposing face of the application face to each liquid removal opening.

In a preferred embodiment, the cleaning head has a circular circumference.

The cleaning head and the brush disc having a circular circumference is advantageous for numerous of reasons. First, the particular circular geometry allows for the dimensions of the cleaning tool and its components to be minimized. Second, the brush disc can perfectly fit into the cleaning head and rotate around its centre, while keeping the dimensions optimized. Last, the applicant noticed that the whole cleaning liquid removal system is further optimized.

In a preferred embodiment, the vehicle cleaning tool comprises a motor. Preferably, the motor is configured for rotating the brush disc and/or the nozzle. The nozzle can comprise a nozzle opening at a bottom surface or at a side surface.

In an embodiment, the vehicle cleaning tool comprises an anti-gravity arm. Preferably, the anti-gravity arm comprises the cleaning head. Preferably, the anti-gravity arm comprises a distal end, wherein the distal end is the end closest to a surface of a vehicle. Preferably, the cleaning head is located at the distal of the anti-gravity arm. The anti-gravity arm may or may not be a part of a wearable system.

A cleaning head may be extremely heavy, making it challenging for a cleaner to keep supporting its weight during the cleaning process. The anti-gravity arm completely supports the weight of the cleaning head at any position it is placed in. Therefore making the cleaning tool more user friendly. The cleaner only needs to invest in physical effort in order to move the cleaning head to another surface section. After moving the cleaning head, the weight of the head is again supported by the anti-gravity arm. The anti-gravity arm also supports the weight of the cleaning head during the movement of the cleaning head from one surface section to the other.

In an embodiment, the vehicle cleaning tool comprises a substation. Preferably, the substation comprises a liquid-air separator.

The applicant has noticed that the removal of air from the vehicle cleaning tool is extremely important for the tool to function correctly, especially in a cleaning tool wherein the cleaning liquid is being recovered and reused. The recovered water has to be able to flow back to a cleaning liquid reservoir and the liquid in the reservoir has to be pumped to the end of the vehicle cleaning tool located closest to a surface of a vehicle. The presence of excess air could hinder the liquid flow, making the addition of a liquid-air separator extremely beneficial.

In a preferred embodiment, the liquid-air separator comprises a liquid-air inlet, a liquid outlet, an air outlet, or a combination thereof. Preferably, the liquid-air separator comprise a first chamber. Preferably, the liquid-air inlet leads the liquid-air flow to the first chamber. Preferably, the first chamber is configured for expanding the liquid-air volume.

The applicant remarks that by simply expanding the volume of the liquid-air mixture a significant amount air is separated from the cleaning liquid.

In a preferred embodiment, the liquid-air separator comprises a second chamber. Preferably, the first and the second chamber are connected through a chamber opening. Preferably, the second chamber is positioned parallel to the first chamber. Preferably, the chamber opening is positioned at a distal end of the first chamber compared to liquid-air inlet. The second chamber can be connected to either a liquid outlet, an air outlet, or both.

The applicant observed that by adding a second chamber a better separation of the air and the liquid could be achieved, by the addition of abrupt changes in the flow direction of the liquid-air mixture.

In a preferred embodiment, the second chamber comprises a porous material. The porous material may or may not be removeable and/or replaceable. Preferably, the porous material takes up between 1% and 99% of the volume of the second chamber. Preferably, the porous material takes up at least 2%, more preferably 5%, even more preferably 10%, even more preferably 15%, even more preferably 20%, even more preferably 25%, even more preferably 30%, even more preferably 35%, of the volume of the second chamber. Preferably, the porous material takes up at most 98%, more preferably 95%, even more preferably 90%, even more preferably 85%, even more preferably 80%, even more preferably 75%, even more preferably 70%, even more preferably 65%, of the volume of the second chamber. Preferably, the porous material is a foam.

The applicant noticed that by adding a foam to the second chamber even more air could be separated from the liquid-air mixture.

In a preferred embodiment, the substation comprises a blower, a pump and/or a safety valve.

The applicant noticed that the addition of a blower could put a negative pressure on the liquid-air separator, making sure the liquid-air mixture pressure flows to the liquid-air separator. Keeping the liquid flowing is important in order to reuse the recovered liquid.

In a preferred embodiment, the substation is moveable and/or portable. In a more preferred embodiment, the substation is mounted onto a platform. Preferably, the platform is a component of a height system configured for increasing or decreasing the height of the platform. Preferably, the height system comprises one or more folding arms. Preferably, the one or more folding arms are configured for adjusting the height of the platform.

Making the substation in height movable together with the cleaner is beneficial for the efficient removal of the cleaning liquid from the cleaning head.

In an embodiment, the vehicle cleaning tool comprises an anti-gravity arm connected to a substation. Preferably, the substation comprises a slide. Preferably, the anti-gravity arm is connected to the slide.

Connecting the anti-gravity arm through a slide to the substation allows the cleaner to experience the advantages of the anti-gravity arm, while the arm remains resting on a slide. The cleaner can easily and effortlessly adapt the height of the anti-gravity arm by simply sliding the arm up and down the slide.

In an embodiment, the ground station comprises a main tank and a soap tank. Preferably, the main tank is configured for the cleaning liquid not to be extracted from the lowest point of the tank. Preferably, the ground station is configured to from time to time spike the soap concentration of the cleaning liquid. The points of time at which the liquid is spiked may or may not be predetermined. Preferably, the ground station comprises a fill circuit configured for adding water to the main tank. The ground station may or may not comprise a sensor for determining the amount of active soap in the cleaning liquid. Preferably, the liquid flow in the main tank is lower compared to the liquid flow through the supply tube.

By separating the main tank from the soap tank, the addition of soap can be controlled, without the need to manually add the soap to the cleaning liquid. Depending on the necessity more soap could be added to the cleaning liquid. Measuring with a sensor the amount of active soap present in the cleaning liquid would allow to optimize the utilization of the soap. Keeping the liquid flow in the main tank low heavier solid material can sink to the bottom, and be separated from the liquid flow.

In an embodiment, the ground station comprises one or more filters configured to remove solid material from the cleaning liquid.

The invention is further described by the following non-limiting examples which further illustrate the invention, and are not intended to, nor should they be interpreted to, limit the scope of the invention.

In a second aspect the invention relates to a method for cleaning a vehicle.

In accordance with the invention, the method comprises the steps of:
- Pumping a cleaning liquid via a supply tube into a waiting cavity;
- Ejecting the cleaning liquid from the waiting cavity into a cleaning head through a nozzle, whereby the cleaning head comprises one or more liquid removal openings and is configured for recovering the cleaning liquid; and
- Cleaning a surface of a vehicle with the cleaning head and the cleaning liquid, whereby the cleaning liquid is continuously being removed from the cleaning head through the one or more liquid removal openings, and whereby the cleaning liquid is replaced with fresh cleaning liquid.

The method further comprises:
- Passing of the cleaning liquid through a valve system located at or near the waiting cavity, preferably upstream of the waiting cavity;
- determining whether a distance between the cleaning head and a surface of a vehicle exceeds a predetermined value; and
- and closing off the valve system in case the distance exceeds the predetermined value.

According to an especially preferred embodiment of the invention, the supply tube, the waiting cavity, the cleaning head and the nozzle according to the second aspect of the invention are comprised by a vehicle cleaning tool according to the first aspect of the invention.

According to an especially preferred embodiment of the disclosure, the cleaning head comprises one or more grooves, preferably two or more grooves. Said one or more grooves are located approximately to the disc application face. Said one or more grooves comprise a groove opening configured for recovering the cleaning liquid. Said one or more grooves comprise a liquid removal opening positioned at a distal end of the groove with respect to the groove opening.

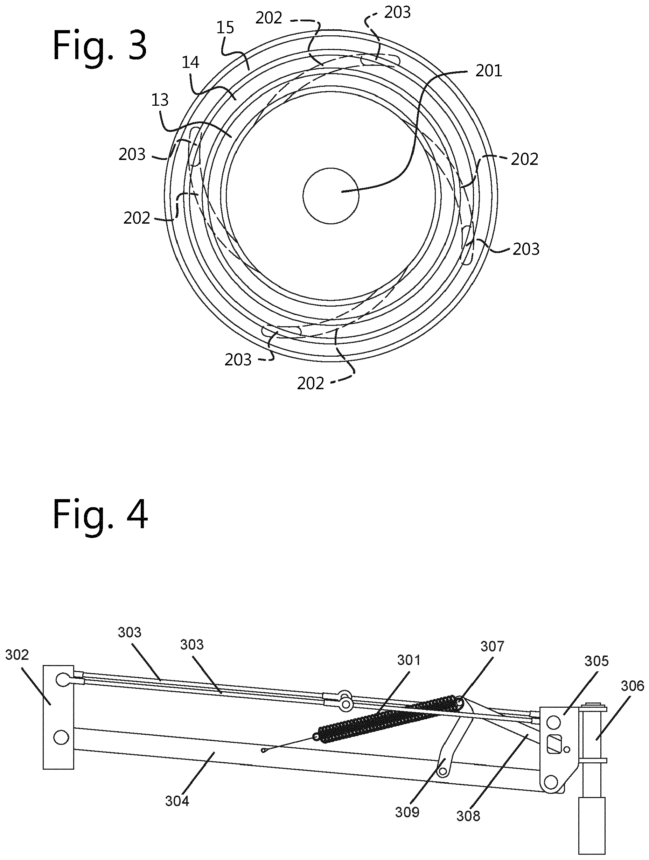

According to an especially preferred embodiment of the disclosure, the one or more grooves comprise a curvature. Preferably, the curvature may have a clockwise or counter clockwise direction. Most preferably, the one or more grooves are spiral grooves, as is for example shown in figure 4. Preferably, within such configuration, the groove opening configured for recovering the cleaning liquid is substantially closer provided to a centre of the application face than the liquid removal opening. It is clear that a radial distance of the position of both openings to the centre of the application face is meant. Such configuration is a consequence of an ideal spiral configuration of the grooves. Similar to grooves with a curvature, spiral groves are extraordinarily efficient in removing cleaning liquid from the cleaning head, especially when said liquid is trapped in the cleaning head and is being rotated. The applicant notes that the liquid does not need to change the force vector already in place due to the rotation, therefore the liquid enters more easily into spiral grooves.

Most preferably, the cleaning head comprises two or more spiral grooves in a configuration as discussed hereabove. Upon increasing the number of grooves, the liquid removal from the cleaning head is improved, as a more omnidirectional water collection is possible and less water accumulation will occur in regions of the cleaning head not provided with groove openings. Upon increasing the number of grooves, construction complexity and cost is however increased. The applicant notes that, to his experience, an optimum water collection can be achieved with three or four spiral grooves, while construction complexity and cost can be maintained sufficiently low.

According to an especially preferred embodiment of the disclosure, the cleaning tool comprises one or more suction nozzles, attached on the opposing face of the application face to each groove opening and wherein each liquid removal opening is connected to a suction nozzle. As is for example discussed in example 2, such configuration allows for an efficient water, and subsequently also dirt, removal from the cleaning head and a cleaning surface of the vehicle. Furthermore, the applicant notes that a swirling, also rotational, motion of the cleaning liquid is extraordinarily enhanced when the suction nozzles are provided at the distal end of spiral grooves, such are for example discussed hereabove. Such swirling motion is especially advantageous, as it even further enhances the cleaning capabilities of the cleaning tool, by improving water collection as well as the loosening of dirt from the cleaning surface. The applicant also notes that difficult to remove pieces of dirt, such as lumps of for example sand, are more easily loosened when increasing the swirling motion of the cleaning liquid.

According to an especially preferred embodiment of the disclosure, the vehicle cleaning tool comprises an anti-gravity arm, comprising a spring, wherein the anti-gravity arm is configured to at least partially support the weight of the cleaning head, wherein the anti-gravity arm further comprises a distal end configured for attaching a cleaning head onto the anti-gravity arm, a proximal end configured for attaching the anti-gravity arm onto a supporting system, a beam connecting said distal and proximal end and a spring support system, wherein the anti-gravity arm further comprises two stiff parallel wires connecting said distal and proximal end, wherein the spring support system comprises a central point, a first arm connecting the central point to said proximal end, a second arm connecting the central point to the beam, a third arm comprising the spring connecting the central point to the beam, or a combination thereof. Such configuration is for example illustrated in example 3 below. Such configuration is easy operated and produced. Furthermore, such configuration allows for a flat application of the cleaning head to a cleaning surface, even when said cleaning surface comprises a curvature, such is for example the case for traditional aircraft fuselages. Preferably, the platform comprising the mounted substation, as discussed hereabove, also comprises the supporting system for the above anti-gravity arm.

### Examples

The present invention will now be further exemplified with reference to the following example(s). The present invention is in no way limited to the given examples or to the embodiments presented in the figures.

### Example 1: An embodiment of the vehicle cleaning tool

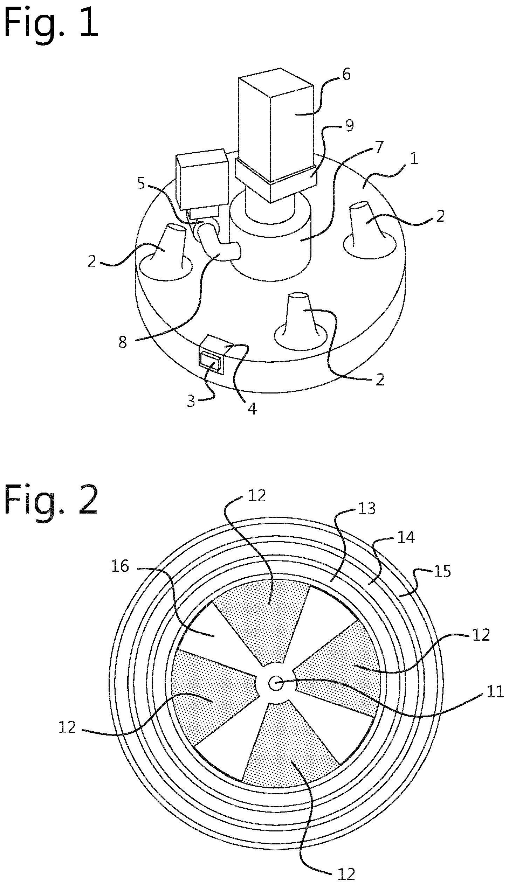

To better exemplify reference is made to FIG 1, which shows the vehicle cleaning tool comprising a cleaning head (1), four suction nozzles (2), a sensor (3) which is attached to the cleaning head through a platelet comprising an angle of about 90° (4), a valve system (5), a motor (6), a waiting cavity (7), a supply tube (8). Preferably, the cleaning head comprises a gearbox (9). Preferably, the cleaning head is configured to be placed onto or in very close proximity of a surface of a vehicle. Preferably, each suction nozzle is connected to a liquid removal opening present in the cleaning head housing. Preferably, the liquid removal opening is configured for removing the cleaning liquid from the cleaning head.

A cleaning liquid is pumped from a ground station through the supply tube (8) to the cleaning head (1). Hereby, the cleaning liquid is passing through the valve system (5). Preferably, the valve system is closed if the distance from a surface of a vehicle to the sensor exceeds a predefined limit. If the cleaning head is accidentally lifted from the surface the cleaning liquid spill will be limited. The liquid further passes through the waiting cavity (7). The cavity is filled with the cleaning liquid. The cleaning liquid flows through a nozzle from the waiting cavity to the application face of the cleaning head.

### Example 2: Application face

Reference is made to FIG 2 and FIG 3, which shows the application face of the cleaning head, wherein the cleaning head is configured to recover the cleaning liquid. Preferably, the cleaning head has a circular circumference. FIG 2 illustrates the application face with the brush disc, while FIG 3 illustrates the application face without the brush disc.

Reference is made to FIG 2, the application face comprises a brush disc (16), comprising four zones comprising a brush (12). Preferably, the application face comprises a first brush groove for the placement of a support brush (13) and a second brush groove for the placement of a first sealing brush (14). Preferably, the application face comprises a third brush groove for the placement of a second sealing brush (15). Preferably, the zones comprising a brush (12) are symmetrically positioned.

Reference is made to FIG 3, the cleaning head housing comprises a housing opening (201), the second brush groove for the placement of a first sealing brush (14), and the third brush groove for the placement of a second sealing brush (15). Preferably, the housing comprises the first brush groove for the placement of a support brush (13). Preferably, the housing comprises four grooves (202) each comprising a liquid removal opening (203). Preferably, the grooves are located approximately at the brush disc application face. Preferably, the grooves have a symmetrical positioning. Preferably, each liquid removal opening is connect to a suction nozzle (2).

The nozzle enters the recess of the cleaning head through the housing opening (201) and the opening (11). Preferably, the cleaning liquid is distributed into the recess through the nozzle. Preferably, when the brush disc rotates, the liquid is moved in an outward direction due to the centrifugal force. Preferably, the brushless zones of the brush disc cumulate the cleaning liquid. Preferably, the accumulated cleaning liquid flows into the tangential grooves, wherein it will flow into the groove opening and be removed from the cleaning head by one or more channels.

### Example 3: Anti-gravity arm

Reference is made to FIG 4. The anti-gravity arm comprises a spring (301), a distal end (302) configured for attaching a cleaning head onto the anti-gravity arm, a proximal end (305) configured for attaching the anti-gravity arm onto a supporting system (306), a beam (304) comprising a top, a bottom and four side faces connecting the distal and the proximal end, a spring support system. Preferably, the anti-gravity arm comprises two stiff parallel wires (303) connecting the distal and the proximal end, a spring support system. Preferably, the beam (304) and/or the two stiff parallel wires (303) are rotatably connected to the distal and the proximal end. Preferably, the supporting system rotates and/or is moveable. The supporting system may or may not be a wearable system.

The spring support system comprises a central point (307), a first arm (308) connecting the central point to the proximal end, a second arm (309) connecting the central point to the two elongated side faces of the beam, a third arm comprising the spring (301) connecting the central point to the top face of the beam, or a combination thereof. Preferably, the first, the second and the third arm are rotatably attached to respectively the proximal end, the two elongated side faces of the beam and the top face of the beam.

### Example 4: Moveable substation system

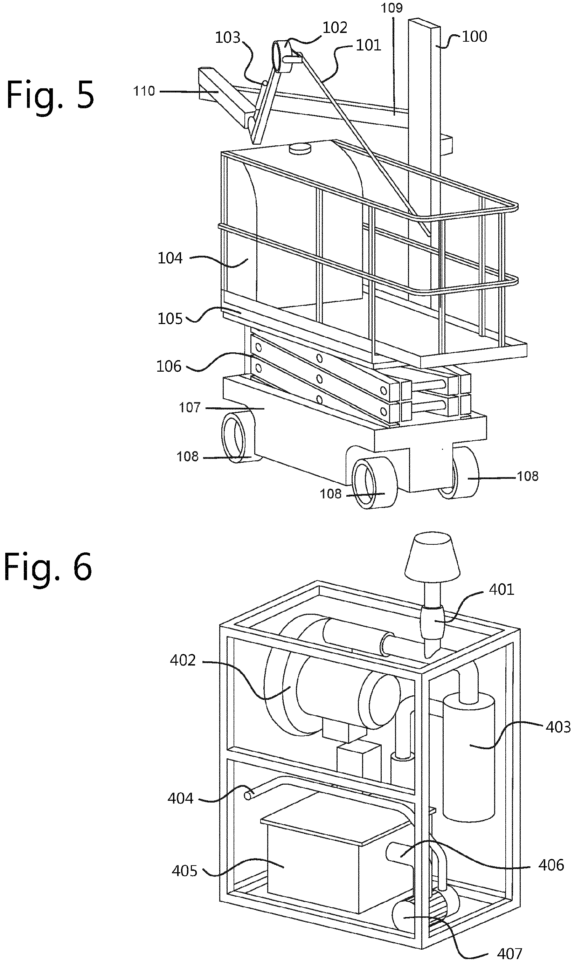

Reference is made to FIG 5. Preferably, a substation (104) mounted onto a platform (105). Preferably, the platform is mounted onto one or more folding arms (106). Preferably, the folding arms are configured to adjust the height of the substation. Preferably, the folding arms are mounted onto a moveable system (107). Preferably, the movable system comprises two or more wheels (108). Preferably, the platform comprises a slide (100). Preferably, the slide comprises a first beam (109), is rotatable with regard to the slide. Preferably, the height at which the first beam is placed onto the slide is adjustable. Preferably, the first beam comprises a second beam (110). Preferably, the second beam is rotatable with regard to the first beam. Preferably, the second beam comprises an anti-gravity arm (103). Preferably, the anti-gravity arm is rotatable with regard to the second beam. Preferably, the anti-gravity arm comprises a cleaning head (102). Preferably, the cleaning head (102) comprises a rod (101). Preferably, the rod is configured for allowing the cleaner to move the cleaning head from one position to another one.

The combination of all the components in FIG 5 optimizes the user friendliness of the cleaning tool. The whole weight of the cleaning head is supported by the system. The cleaner only needs to move the cleaning head from one position to another position, not requiring the cleaner to be in an exceptional physical shape in order to clean a vehicle. Further, the system allows for the cleaner to reach a height needed to clean the upper surface of an aircraft, while also being able to clean surfaces located in close proximity of the floor.

### Example 5: Substation comprising a liquid-air separator

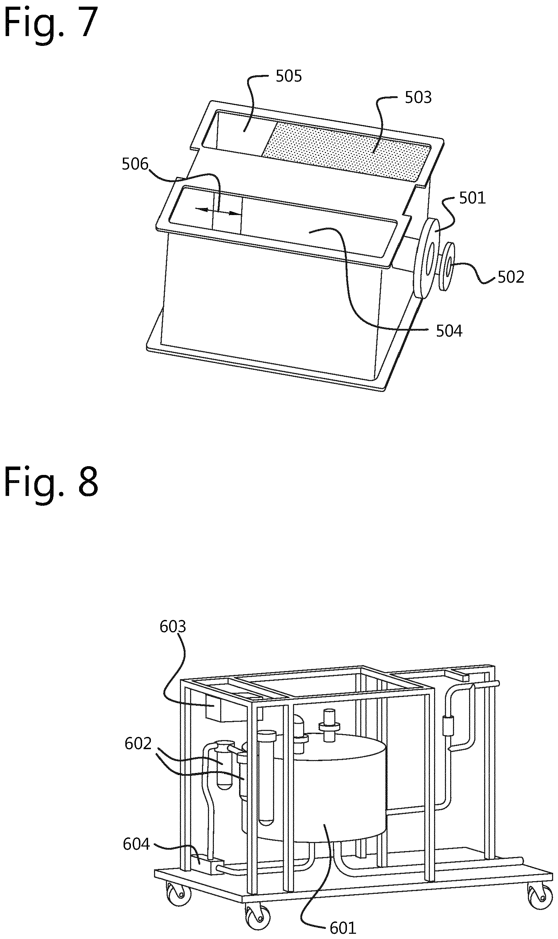

Reference is made to FIG 6 and FIG 7. The substation comprises a liquid-air separator (405). Preferably, the substation comprises further, a blower (402), a safety valve (401), a cyclone filter (403), a pump (407), a liquid-air inlet (406), a liquid outlet (404), or a combination thereof.

The separator comprises a first chamber (504), a second chamber (505), an chamber opening (506), a liquid-air mixture inlet (501), an liquid outlet (502), a foam (503), or a combination thereof. Preferably, the foam is located in the second chamber. Preferably, the foam takes up a part of the second chamber volume. For example, there can still be space left for the liquid to effortlessly flow out of liquid outlet underneath the foam.

Preferably, the substation is configured to pump water back to a ground station. Preferably, the blower (402) puts the entire liquid-air separator (405) on a negative pressure. Preferably, the negative energy sucks liquid-air mixture from the cleaning head to the substation. Preferably, the liquid-air separator (405) is configured for separating air from the cleaning liquid coming from the cleaning head. Preferably, the separated air is pulled through the cyclone filter. Preferably, the cyclone filter removes liquid residues present in the separated air. Preferably, the air stream is pulled through the blower. Preferably, the air is released into the environment. Preferably, the cleaning liquid is on the bottom in the liquid-air separator and is pumped back to the ground station.

Preferably, the liquid-air mixture enters the liquid-air separator through the first chamber (504). Preferably, the volume of liquid-air mixture is enlarged in the first chamber, whereby the liquid-air stream is slowed down. Seen that there is less energy it is harder for the water to stay afloat, resulting in a first liquid-air separation. Preferably, the liquid-air mixture flows to the second chamber through the chamber opening. Preferably, liquid-air mixture flow makes two abrupt bends while entering the second chamber. Due to the higher inertia of the water molecules, a part of them will collide with the walls of the first and/or second chamber. Their velocity will decrease to zero and so they will fall to the bottom of the filter, achieving a further separation. Preferably, a part or the whole liquid-air mixture flows through the foam. Foam acts as a maze structure through which the air can flow quite easily, the water molecules however will have more difficulty to change direction this often and this fast so they will collide with the foam structure and drip down.

### Example 6: Ground station

Reference is made to FIG 8. The ground station comprises a soap tank (603), a main tank (601), at least one filter (602), a pump (604), or a combination thereof. Preferably, the soap tank comprises pure cleaning agent. Preferably, the cleaning agent is a soap or a detergent.

Preferably, the main tank holds the main amount of cleaning liquid in the vehicle cleaning tool. Preferably, starting with a work shift the cleaning liquid is already mixed with a predetermined amount of soap. Seen that the water is recirculated the amount of active soap is diminishing over time. Preferably, the soap tank spikes the main tank from time to time with extra cleaning agent. Preferably, the cleaning liquid flow in the main tank is lower compared to the liquid flow in the supply tube. Preferably, the heavier solid material will sink, and be separated from the liquid flow. Preferably, heavier solid material is separated from liquid flow by not extracting the cleaning liquid at the lowest point of the main tank. Preferably, the water flows through a pump. Preferably, the pumps delivers enough pressure to push the cleaning liquid through the one or more filters, and to the cleaning head.

## Claims

1. A vehicle cleaning tool, preferably wherein the vehicle is an aircraft, comprising:
• a cleaning head (1) comprises a housing, the housing comprising an application face and a recess at the application face;
• a waiting cavity (7) for cleaning liquid;
• a supply tube (8) configured for supplying the waiting cavity (7) with cleaning liquid;
• a nozzle comprising a passage for cleaning liquid flow from the waiting cavity (7) to the recess,
**characterized in that** the vehicle cleaning tool comprises a sensor (3) configured for measuring the distance between a surface of a vehicle and the cleaning head, wherein the vehicle cleaning tool comprises a valve system (5) at or near an end of the supply tube (8), wherein the valve system (5) is configured for adjusting fluid supply from the supply tube (8) to the waiting cavity (7) and wherein the vehicle cleaning tool is configured to close off said end of the supply tube (8) via the valve system (5) when the distance between the cleaning head (1) and the surface of the vehicle exceeds a predefined limit,
and wherein the cleaning head (1) comprises one or more grooves, wherein the one or more grooves comprise a groove opening configured for recovering the cleaning liquid and wherein each groove comprises a liquid removal opening positioned at a distal end of the groove with respect to the groove opening.

2. The vehicle cleaning tool according to claim 1,
**characterized in that** the cleaning head (1) comprises a circumferential sealing brush located at the application face and at or near the circumference of the recess of the cleaning head (1), wherein the cleaning head (1) comprises at least two spaced circumferential sealing brushes (14, 15) located at the application face and at or near the circumference of the recess of the cleaning head (1), and
wherein said at least two spaced circumferential sealing brushes (14, 15) are two spaced circumferential sealing brushes.

3. The vehicle cleaning tool according to claims 1 or 2, wherein the cleaning head (1) preferably comprises at least two spaced circumferential sealing brushes (14, 15) located at the application face and at or near the circumference of the recess of the cleaning head (1), **characterized in that** the spacing between circumferential sealing brushes (14, 15) is between 0.1 mm and 2 cm, preferably between 0.5 mm and 18 mm, more preferably between 1 mm and 9 mm, wherein the circumferential sealing brushes (14, 15) comprise a plurality of bristles, wherein the bristles are positioned at an angle of between 5° and 40°, preferably between 20° and 30°, more preferably between 20° and 25°, even more preferably at an angle of 23°, compared to the normal of the application face.

4. The vehicle cleaning tool according to any of the preceding claims 1 to 3, **characterized in that** the cleaning head (1) comprises a circumferential support brush (13) located at the application face and at or near the circumference of the recess of the cleaning head (1), configured for supporting the weight of the cleaning head.

5. The vehicle cleaning tool according to any of the preceding claims 1 to 4, wherein the cleaning head (1) comprises a brush disc (16) located in the recess, wherein the brush disc (16) comprises a disc application face, wherein the disc application face comprises one or more brushes, and wherein the brush disc (16) is configured to rotate, wherein the disc application face comprises a multitude of zones and an opening located at or near the centre of the brush disc (16), wherein at least one of the zones comprises one or more brushes, wherein at least one of the zones comprises no brushes, wherein preferably a number of at least two zones comprising brushes are interspersed, preferably angularly interspersed, with the same number of brushless zones.

6. The vehicle cleaning tool according to any of the preceding claims 1 to 5, **characterized in that** the groove comprises a curvature, preferably wherein the curvature can have a clockwise or counter clockwise direction, and wherein the groove is a spiral groove, preferably wherein the groove opening configured for recovering the cleaning liquid is substantially closer provided to a centre of the application face than the liquid removal opening.

7. The vehicle cleaning tool according to any of the preceding claims 1 to 6, wherein the cleaning tool comprises one or more suction nozzles (2), attached on the opposing face of the application face to each groove opening, and wherein each liquid removal opening is connected to a suction nozzle (2).

8. The vehicle cleaning tool according to any of the preceding claims 1 to 7, **characterized in that** vehicle cleaning tool comprises an anti-gravity arm, comprising a spring (301),
wherein the anti-gravity arm is configured to at least partially support the weight of the cleaning head (1),
wherein the anti-gravity arm further comprises a distal end (302) configured for attaching the cleaning head (1) onto the anti-gravity arm, a proximal end (305) configured for attaching the anti-gravity arm onto a supporting system (306), a beam (304) connecting said distal (302) and proximal end (305) and a spring support system, wherein the anti-gravity arm further comprises two stiff parallel wires (303) connecting said distal (302) and proximal proximal end (305),
wherein the spring support system comprises a central point (307), a first arm (308) connecting the central point (307) to said proximal end (305), a second arm (309) connecting the central point (307) to the beam (304), a third arm comprising the spring (301) connecting the central point (307) to the beam (304), or a combination thereof.

9. The vehicle cleaning tool according to the preceding claim 8, **characterized in that** the vehicle cleaning tool comprises:
• a substation (104) mounted onto a platform (105), preferably comprising the supporting system (306), wherein the platform (105) is mounted onto an in the height adjustable system comprising one or more folding arms (106), and wherein the height adjustable system comprises wheels (108); and
• a slide (100) configured for adjusting the height of the anti-gravity arm.

10. The vehicle cleaning tool according to the preceding claim 9, **characterized in that** the substation (104) comprises a liquid-air separator (405), wherein said liquid air separator (405) comprises a first chamber (504) configured for expanding the volume of a liquid-air mixture; a second chamber (505) connected to the first chamber (504) through a chamber opening (506), wherein the second chamber (505) comprises a porous material, and preferably wherein the porous material is a foam (503).

11. A method for cleaning a vehicle, preferably wherein the vehicle is an aircraft, comprising the steps of:
a. pumping a cleaning liquid via a supply tube (8) into a waiting cavity (7);
b. ejecting the cleaning liquid from the waiting cavity (7) into a cleaning head (1) through a nozzle, whereby the cleaning head (1) comprises one or more liquid removal openings and is configured for recovering the cleaning liquid; and
c. cleaning a surface of a vehicle with the cleaning head (1) and the cleaning liquid, whereby the cleaning liquid is continuously being removed from the cleaning head (1) through the one or more liquid removal openings, and whereby the cleaning liquid is replaced with fresh cleaning liquid,
wherein the cleaning liquid passes through a valve system (5) located at or near the waiting cavity (7), preferably upstream of the waiting cavity (7), comprising the steps of: determining whether a distance between the cleaning head (1) and a surface of a vehicle exceeds a predetermined value; and closing off the valve system (5) in case the distance exceeds the predetermined value.

12. The method according to claim 11, wherein the supply tube (8), the waiting cavity (7), the cleaning head (1) and the nozzle are comprised by a vehicle cleaning tool according to any of preceding claims 1 to 10.

## Patentansprüche

1. Ein Fahrzeugreinigungswerkzeug, vorzugsweise wobei das Fahrzeug ein Luftfahrzeug ist, umfassend:
• einen Reinigungskopf (1), der ein Gehäuse umfasst, das Gehäuse umfassend eine Applikationsfläche und eine Aussparung an der Applikationsfläche;
• einen Wartehohlraum (7) für Reinigungsflüssigkeit;
• ein Zufuhrrohr (8), das zum Zuführen von Reinigungsflüssigkeit zu dem Wartehohlraum (7) konfiguriert ist;
• eine Düse, umfassend einen Durchgang für einen Reinigungsflüssigkeitsstrom aus dem Wartehohlraum (7) zu der Aussparung,
**dadurch gekennzeichnet, dass** das Fahrzeugreinigungswerkzeug einen Sensor (3) umfasst, der zum Messen der Distanz zwischen einer Oberfläche eines Fahrzeugs und dem Reinigungskopf konfiguriert ist, wobei das Fahrzeugreinigungswerkzeug ein Ventilsystem (5) an oder nahe einem Ende des Zufuhrrohrs (8) umfasst, wobei das Ventilsystem (5) zum Einstellen der Fluidzufuhr aus dem Zufuhrrohr (8) in den Wartehohlraum (7) konfiguriert ist, und wobei das Fahrzeugreinigungswerkzeug konfiguriert ist, um das Ende des Zufuhrrohrs (8) über das Ventilsystem (5) zu schließen, wenn die Distanz zwischen dem Reinigungskopf (1) und der Oberfläche des Fahrzeugs ein vordefiniertes Limit überschreitet, und wobei der Reinigungskopf (1) eine oder mehrere Nuten umfasst, wobei die eine oder die mehreren Nuten eine Nutöffnung umfassen, die zum Rückgewinnen der Reinigungsflüssigkeit konfiguriert ist, und wobei jede Nut eine Flüssigkeitsentfernungsöffnung umfasst, die an einem distalen Ende der Nut in Bezug auf die Nutöffnung positioniert ist.

2. Das Fahrzeugreinigungswerkzeug nach Anspruch 1, **dadurch gekennzeichnet, dass** der Reinigungskopf (1) eine Umfangsabdichtbürste umfasst, die sich an der Applikationsfläche und an oder nahe dem Umfang der Aussparung des Reinigungskopfs (1) befindet, wobei der Reinigungskopf (1) mindestens zwei beabstandete Umfangsabdichtbürsten (14, 15) umfasst, die sich an der Applikationsfläche und an oder nahe dem Umfang der Aussparung des Reinigungskopfs (1) befinden, und
wobei die mindestens zwei beabstandeten Umfangsabdichtbürsten (14, 15) zwei beabstandete Umfangsabdichtbürsten sind.

3. Das Fahrzeugreinigungswerkzeug nach den Ansprüchen 1 oder 2, wobei der Reinigungskopf (1) vorzugsweise mindestens zwei beabstandete Umfangsabdichtbürsten (14, 15) umfasst, die sich an der Applikationsfläche und an oder nahe dem Umfang der Aussparung des Reinigungskopfs (1) befinden,
**dadurch gekennzeichnet, dass** der Abstand zwischen Umfangsabdichtbürsten (14, 15) zwischen 0,1 mm und 2 cm, vorzugsweise zwischen 0,5 mm und 18 mm, stärker bevorzugt zwischen 1 mm und 9 mm, beträgt,
wobei die Umfangsabdichtbürsten (14, 15) eine Vielzahl von Borsten umfassen,
wobei die Borsten in einem Winkel zwischen 5° und 40°, vorzugsweise zwischen 20° und 30°, stärker bevorzugt zwischen 20° und 25°, noch stärker bevorzugt in einem Winkel von 23°, im Vergleich zu der Normalen der Applikationsfläche positioniert sind.

4. Das Fahrzeugreinigungswerkzeug nach einem der vorstehenden Ansprüche 1 bis 3, **dadurch gekennzeichnet, dass** der Reinigungskopf (1) eine Umfangsstützbürste (13) umfasst, die sich an der Applikationsfläche und an oder nahe dem Umfang der Aussparung des Reinigungskopfs (1) befindet, die zum Stützen des Gewichts des Reinigungskopfs konfiguriert ist.

5. Das Fahrzeugreinigungswerkzeug nach einem der vorstehenden Ansprüche 1 bis 4, wobei der Reinigungskopf (1) eine Bürstenscheibe (16) umfasst, die sich in der Aussparung befindet, wobei die Bürstenscheibe (16) eine Scheibenapplikationsfläche umfasst, wobei die Scheibenapplikationsfläche eine oder mehrere Bürsten umfasst, und wobei die Bürstenscheibe (16) konfiguriert ist, um sich zu drehen, wobei die Scheibenapplikationsfläche eine Menge an Zonen und eine Öffnung umfasst, die sich an oder nahe der Mitte der Bürstenscheibe (16) befindet, wobei mindestens eine der Zonen eine oder mehrere Bürsten umfasst, wobei mindestens eine der Zonen keine Bürsten umfasst, wobei vorzugsweise eine Anzahl von mindestens zwei Zonen, umfassend Bürsten, mit der gleichen Anzahl von bürstenlosen Zonen durchsetzt sind, vorzugsweise winkelig durchsetzt.

6. Das Fahrzeugreinigungswerkzeug nach einem der vorstehenden Ansprüche 1 bis 5, **dadurch gekennzeichnet, dass** die Nut eine Krümmung umfasst, vorzugsweise wobei die Krümmung eine Richtung im Uhrzeigersinn oder gegen den Uhrzeigersinn aufweisen kann, und wobei die Nut eine Spiralnut ist, vorzugsweise wobei die Nutöffnung, die zum Rückgewinnen der Reinigungsflüssigkeit konfiguriert ist, im Wesentlichen näher an einer Mitte der Applikationsfläche als die Flüssigkeitsentfernungsöffnung bereitgestellt ist.

7. Das Fahrzeugreinigungswerkzeug nach einem der vorstehenden Ansprüche 1 bis 6,
wobei das Reinigungswerkzeug eine oder mehrere Saugdüsen (2) umfasst, die an der gegenüberliegenden Fläche der Applikationsfläche an jeder Nutöffnung angebracht sind, und wobei jede Flüssigkeitsentfernungsöffnung mit einer Saugdüse (2) verbunden ist.

8. Das Fahrzeugreinigungswerkzeug nach einem der vorstehenden Ansprüche 1 bis 7, **dadurch gekennzeichnet, dass** das Fahrzeugreinigungswerkzeug einen Anti-Schwerkraft-Arm umfasst, umfassend eine Feder (301), wobei der Anti-Schwerkraft-Arm konfiguriert ist, um das Gewicht des Reinigungskopfs (1) mindestens teilweise abzustützen, wobei der Anti-Schwerkraft-Arm ferner ein distales Ende (302) umfasst, das zum Anbringen des Reinigungskopfs (1) auf dem Anti-Schwerkraft-Arm konfiguriert ist,
ein proximales Ende (305), das zum Anbringen des Anti-Schwerkraft-Arms auf einem Stützsystem (306) konfiguriert ist, einen Träger (304), der das distale (302) und das proximale Ende (305) verbindet,
und ein Federstützsystem, wobei der Anti-Schwerkraft-Arm ferner zwei steife parallele Drähte (303) umfasst, die das distale (302) und das proximale Ende (305) verbinden, wobei das Federstützsystem einen Mittelpunkt (307), einen ersten Arm (308), der den Mittelpunkt (307) mit dem proximalen Ende (305) verbindet, einen zweiten Arm (309), der den Mittelpunkt (307) mit dem Träger (304) verbindet, einen dritten Arm, umfassend die Feder (301), der den Mittelpunkt (307) mit dem Träger (304) verbindet, oder eine Kombination davon umfasst.

9. Das Fahrzeugreinigungswerkzeug nach dem vorstehenden Anspruch 8, **dadurch gekennzeichnet, dass** das Fahrzeugreinigungswerkzeug umfasst:
• eine Unterstation (104), die auf einer Plattform (105) montiert ist, vorzugsweise umfassend das Stützsystem (306), wobei die Plattform (105) auf ein in der Höhe einstellbares System montiert ist, umfassend einen oder mehrere Faltarme (106), und wobei das höheneinstellbare System Räder (108) umfasst; und
• ein Gleitstück (100), das zum Einstellen der Höhe des Anti-Schwerkraft-Arms konfiguriert ist.

10. Das Fahrzeugreinigungswerkzeug nach dem vorstehenden Anspruch 9, **dadurch gekennzeichnet, dass** die Unterstation (104) einen Flüssigkeits-Luft-Abscheider (405) umfasst, wobei der Flüssigkeits-Luft-Abscheider (405) umfasst
eine erste Kammer (504), die zum Expandieren des Volumens eines Flüssigkeits-Luft-Gemischs konfiguriert ist;
eine zweite Kammer (505), die mit der ersten Kammer (504) durch eine Kammeröffnung (506) verbunden ist,
wobei die zweite Kammer (505) ein poröses Material umfasst und vorzugsweise wobei das poröse Material ein Schaum (503) ist.

11. Ein Verfahren zum Reinigen eines Fahrzeugs, vorzugsweise wobei das Fahrzeug ein Luftfahrzeug ist, umfassend die Schritte:
a. Pumpen einer Reinigungsflüssigkeit über ein Zufuhrrohr (8) in einen Wartehohlraum (7);
b. Ausstoßen der Reinigungsflüssigkeit aus dem Wartehohlraum (7) in einen Reinigungskopf (1) durch eine Düse, wodurch der Reinigungskopf (1) eine oder mehrere Flüssigkeitsentfernungsöffnungen umfasst und zum Rückgewinnen der Reinigungsflüssigkeit konfiguriert ist; und
c. Reinigen einer Oberfläche eines Fahrzeugs mit dem Reinigungskopf (1) und der Reinigungsflüssigkeit, wodurch die Reinigungsflüssigkeit aus dem Reinigungskopf (1) durch die eine oder die mehreren Flüssigkeitsentfernungsöffnungen kontinuierlich entfernt wird und wodurch die Reinigungsflüssigkeit durch frische Reinigungsflüssigkeit ersetzt wird,
wobei die Reinigungsflüssigkeit durch ein Ventilsystem (5) verläuft, das sich an oder nahe dem Wartehohlraum (7) befindet, vorzugsweise stromaufwärts des Wartehohlraums (7),
umfassend die Schritte von:
Bestimmen, ob eine Distanz zwischen dem Reinigungskopf (1) und einer Oberfläche eines Fahrzeugs einen vorbestimmten Wert überschreitet; und
Schließen des Ventilsystems (5), falls die Distanz den vorbestimmten Wert überschreitet.

12. Das Verfahren nach Anspruch 11, wobei das Zufuhrrohr (8), der Wartehohlraum (7), der Reinigungskopf (1) und die Düse in einem Fahrzeugreinigungswerkzeug nach einem der vorstehenden Ansprüche 1 bis 10 beinhaltet sind.

## Revendications

1. Un outil de nettoyage de véhicule, de préférence dans lequel le véhicule est un aéronef, comprenant :
• une tête de nettoyage (1) comprend un logement, le logement comprenant une face d'application et un évidement au niveau de la face d'application ;
• une cavité d'attente (7) pour un liquide de nettoyage ;
• un tube d'alimentation (8) configuré pour alimenter la cavité d'attente (7) en liquide de nettoyage ;
• une buse comprenant un passage pour un écoulement de liquide de nettoyage de la cavité d'attente (7) à l'évidement,
**caractérisé en ce que** l'outil de nettoyage de véhicule comprend un capteur (3) configuré pour mesurer la distance entre une surface d'un véhicule et la tête de nettoyage, dans lequel l'outil de nettoyage de véhicule comprend un système de soupape (5) au niveau ou près d'une extrémité du tube d'alimentation (8), dans lequel le système de soupape (5) est configuré pour régler une alimentation en fluide du tube d'alimentation (8) à la cavité d'attente (7) et dans lequel l'outil de nettoyage de véhicule est configuré pour fermer ladite extrémité du tube d'alimentation (8) par l'intermédiaire du système de soupape (5) lorsque la distance entre la tête de nettoyage (1) et la surface du véhicule dépasse une limite prédéfinie,
et dans lequel la tête de nettoyage (1) comprend une ou plusieurs rainures, dans lequel les une ou plusieurs rainures comprennent une ouverture de rainure configurée pour récupérer le liquide de nettoyage et dans lequel chaque rainure comprend une ouverture d'élimination de liquide positionnée au niveau d'une extrémité distale de la rainure par rapport à l'ouverture de rainure.

2. L'outil de nettoyage de véhicule selon la revendication 1, **caractérisé en ce que** la tête de nettoyage (1) comprend une brosse d'étanchéité circonférentielle située au niveau de la face d'application et au niveau ou près de la circonférence de l'évidement de la tête de nettoyage (1), dans lequel la tête de nettoyage (1) comprend au moins deux brosses d'étanchéité circonférentielles (14, 15) espacées situées au niveau de la face d'application et au niveau ou près de la circonférence de l'évidement de la tête de nettoyage (1), et
dans lequel lesdites au moins deux brosses d'étanchéité circonférentielles (14, 15) espacées sont deux brosses d'étanchéité circonférentielles espacées.

3. L'outil de nettoyage de véhicule selon les revendications 1 ou 2, dans lequel la tête de nettoyage (1) comprend de préférence au moins deux brosses d'étanchéité circonférentielles (14, 15) espacées situées au niveau de la face d'application et au niveau ou près de la circonférence de l'évidement de la tête de nettoyage (1), **caractérisé en ce que** l'espacement entre les brosses d'étanchéité circonférentielles (14, 15) est entre 0,1 mm et 2 cm, de préférence entre 0,5 mm et 18 mm, de manière davantage préférée entre 1 mm et 9 mm, dans lequel les brosses d'étanchéité circonférentielles (14, 15) comprennent une pluralité de poils, dans lequel les poils sont positionnés à un angle entre 5° et 40°, de préférence entre 20° et 30°, de manière davantage préférée entre 20° et 25°, de manière davantage encore préférée à un angle de 23°, par rapport à la normale de la face d'application.

4. L'outil de nettoyage de véhicule selon l'une quelconque des revendications 1 à 3 précédentes, **caractérisé en ce que** la tête de nettoyage (1) comprend une brosse de support circonférentielle (13) située au niveau de la face d'application et au niveau ou près de la circonférence de l'évidement de la tête de nettoyage (1), configurée pour supporter le poids de la tête de nettoyage.

5. L'outil de nettoyage de véhicule selon l'une quelconque des revendications 1 à 4 précédentes, dans lequel la tête de nettoyage (1) comprend un disque (16) de brosse situé dans l'évidement, dans lequel le disque (16) de brosse comprend une face d'application de disque, dans lequel la face d'application de disque comprend une ou plusieurs brosses, et dans lequel le disque (16) de brosse est configuré pour tourner, dans lequel la face d'application de disque comprend une multitude de zones et une ouverture située au niveau ou près du centre du disque (16) de brosse, dans lequel au moins l'une des zones comprend une ou plusieurs brosses, dans lequel au moins l'une des zones ne comprend pas de brosse, dans lequel de préférence un nombre d'au moins deux zones comprenant des brosses sont intercalées, de préférence intercalées de manière angulaire, avec le même nombre de zones sans brosse.

6. L'outil de nettoyage de véhicule selon l'une quelconque des revendications 1 à 5 précédentes, **caractérisé en ce que** la rainure comprend une courbure, de préférence dans lequel la courbure peut avoir une direction dans le sens des aiguilles d'une montre ou dans le sens inverse des aiguilles d'une montre, et dans lequel la rainure est une rainure en spirale, de préférence dans lequel l'ouverture de rainure configurée pour récupérer le liquide de nettoyage est prévue sensiblement plus proche d'un centre de la face d'application que l'ouverture d'élimination de liquide.

7. L'outil de nettoyage de véhicule selon l'une quelconque des revendications 1 à 6 précédentes, dans lequel l'outil de nettoyage comprend une ou plusieurs buses d'aspiration (2), fixées sur la face opposée de la face d'application à chaque ouverture de rainure, et dans lequel chaque ouverture d'élimination de liquide est reliée à une buse d'aspiration (2).

8. L'outil de nettoyage de véhicule selon l'une quelconque des revendications 1 à 7 précédentes, **caractérisé en ce que** l'outil de nettoyage de véhicule comprend un bras anti-gravité, comprenant un ressort (301), dans lequel le bras anti-gravité est configuré pour supporter au moins partiellement le poids de la tête de nettoyage (1), dans lequel le bras anti-gravité comprend en outre une extrémité distale (302) configurée pour fixer la tête de nettoyage sur le bras anti-gravité, une extrémité proximale (305) configurée pour fixer le bras anti-gravité sur un système de support (306), un profilé (304) reliant ladite extrémité distale (302) et proximale (305) et un système de support de ressort, dans lequel le bras anti-gravité comprend en outre deux fils parallèles rigides (303) reliant ladite extrémité distale (302) et proximale (305), dans lequel le système de support de ressort comprend un point central (307), un premier bras (308) reliant le point central (307) à ladite extrémité proximale (305), un deuxième bras (309) reliant le point central (307) au profilé (304), un troisième bras comprenant le ressort (301) reliant le point central (307) au profilé (304), ou une combinaison de ceux-ci.

9. L'outil de nettoyage de véhicule selon la revendication 8 précédente, **caractérisé en ce que** l'outil de nettoyage de véhicule comprend :
• une sous-station (104) montée sur une plateforme (105), comprenant de préférence le système de support (306), dans lequel la plateforme (105) est montée sur un système réglable en hauteur comprenant un ou plusieurs bras de pliage (106), et dans lequel le système réglable en hauteur comprend des roues (108) ; et
• une glissière (100) configurée pour régler la hauteur du bras anti-gravité.

10. L'outil de nettoyage de véhicule selon la revendication 9 précédente, **caractérisé en ce que** la sous-station (104) comprend un séparateur liquide-air (405), dans lequel ledit séparateur liquide-air (405) comprend une première chambre (504) configurée pour augmenter le volume d'un mélange liquide-air ; une seconde chambre (505) reliée à la première chambre (504) à travers une ouverture (506) de chambre, dans lequel la seconde chambre (505) comprend un matériau poreux, et de préférence dans lequel le matériau poreux est une mousse (503).

11. Un procédé de nettoyage d'un véhicule, de préférence dans lequel le véhicule est un aéronef, comprenant les étapes de :
a. pompage d'un liquide de nettoyage par l'intermédiaire d'un tube d'alimentation (8) dans une cavité d'attente (7) ;
b. éjection du liquide de nettoyage de la cavité d'attente (7) dans une tête de nettoyage (1) à travers une buse, moyennant quoi la tête de nettoyage (1) comprend une ou plusieurs ouvertures d'élimination de liquide et est configurée pour récupérer le liquide de nettoyage ; et
c. nettoyage d'une surface d'un véhicule avec la tête de nettoyage (1) et le liquide de nettoyage, moyennant quoi le liquide de nettoyage est éliminé en continu de la tête de nettoyage (1) à travers les une ou plusieurs ouvertures d'élimination de liquide, et moyennant quoi le liquide de nettoyage est remplacé par de nouveau liquide de nettoyage,
dans lequel le liquide de nettoyage passe à travers un système de soupape (5) situé au niveau ou près de la cavité d'attente (7), de préférence en amont de la cavité d'attente (7), comprenant les étapes de : fait de déterminer si une distance entre la tête de nettoyage (1) et une surface d'un véhicule dépasse une valeur prédéterminée ; et fermeture du système de soupape (5) dans le cas où la distance dépasse la valeur prédéterminée.

12. Le procédé selon la revendication 11, dans lequel le tube d'alimentation (8), la cavité d'attente (7), la tête de nettoyage (1) et la buse sont compris par un outil de nettoyage de véhicule selon l'une quelconque des revendications 1 à 10 précédentes.
